(19)

Europäisches
Patentamt
European
Patent Office
Office européen
des brevets

(11) **EP 4 617 734 A1**

(12) **EUROPEAN PATENT APPLICATION**

(43) Date of publication:
**17.09.2025 Bulletin 2025/38**

(21) Application number: **25163920.9**

(22) Date of filing: **14.03.2025**

(51) International Patent Classification (IPC):
**G01V 1/30** (2006.01)   **G01V 1/34** (2006.01)
**G01V 20/00** (2024.01)

(52) Cooperative Patent Classification (CPC):
**G01V 1/306; G01V 1/34; G01V 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.03.2024 US 202463565106 P**

(71) Applicants:
• **Services Pétroliers Schlumberger
75007 Paris (FR)**
• **GeoQuest Systems B.V.
2514 JG The Hague (NL)**

(72) Inventors:
• **DI, Haibin
Houston, TX 77077 (US)**
• **HU, Wenyi
Houston, TX 77042-4205 (US)**
• **PHAN, Son
Houston, TX 77077 (US)**
• **ABUBAKAR, Aria
Houston, TX 77077 (US)**

(74) Representative: **Schlumberger Intellectual
Property Department
Parkstraat 83
2514 JG Den Haag (NL)**

(54) **A DEEP LEARNING WORKFLOW FOR SEISMIC INVERSION**

(57)    A method for converting seismic data into geophysical property models. The method includes receiving seismic data from a site, wherein the seismic data includes seismic stacks and well logs received from the site. A large-scale structural model (LSSM) is then constructed from the received seismic data. The method includes estimating initial geophysical properties related to the site using a first neural network trained by the seismic data and the constructed LSSM. Data may then be extracted from the received data and used to train a second neural network. The method also includes revising the initial geophysical properties using a second trained neural network. The revised geophysical properties, which may include p-velocity, density, or s-velocity, may be displayed on a screen. The method also includes performing a site action based on the revised geophysical properties.

EP 4 617 734 A1

**Description**

**CROSS-REFERENCE TO RELATED APPLICATIONS**

This patent application claims priority to U.S. Provisional Application No. 63/565,106, filed on March 14, 2024, which is incorporated by reference herein in its entirety.

**BACKGROUND**

A reservoir can be a subsurface formation that can be characterized at least in part by its porosity and fluid permeability. As an example, a reservoir may be part of a basin such as a sedimentary basin. A basin can be a depression (e.g., caused by plate tectonic activity, subsidence, etc.) in which sediments accumulate. As an example, where hydrocarbon source rocks occur in combination with appropriate depth and duration of burial, a petroleum system may develop within a basin, which may form a reservoir that includes hydrocarbon fluids (e.g., oil, gas, etc.).

**SUMMARY**

Disclosed are methods, systems, and computer programs for converting seismic data into geophysical property models which may subsequently be used for planning operations at a site such as a wellsite. In certain embodiments, the method includes receiving seismic data from a site. The seismic data includes seismic stacks and well logs related to a subsurface of the site. The method may include constructing a large-scale structural model (LSSM) from the received seismic data. The structural framework includes a stack of major horizons and faults that have been interpreted from the seismic data in order of geologic time. A first neural network may then be trained using the LSSM and the received seismic data. The method also includes estimating initial geophysical properties that are related to the site using the first neural network. The first neural network may also be expandable to include additional tasks such as calculating a full-stack seismic and reconstructing the LSSM. Training data of seismic-property pairs for the second neural network may be extracted from the prediction received from the first neural network. In certain embodiments, extracting training data includes extracting a wavelet from a full-stack within the seismic stacks of the seismic data, calculating a reflectivity from a density value and a P-velocity value from within the initial geophysical properties, and then generating a synthetic seismic volume based on the wavelet and the reflectivity. The method may also include training the second neural network using the LSSM and by mapping the synthetic seismic volume. The initial geophysical properties may be revised using the second neural network. Revising the initial geophysical properties includes applying the second neural network to the seismic data received from the site. The method includes displaying the revised geophysical properties on a screen. The revised geophysical properties may include a density of at least a portion of the subsurface, a p-wave velocity related to the subsurface, or an s-wave velocity related to the subsurface. Additionally, the method may include performing a site action based on the revised geophysical properties. Performing the site action includes generating or transmitting a signal that instructs or causes an action to occur. The action includes a physical action. The physical action includes selecting where to drill a wellbore in the subsurface formation, drilling the wellbore, varying a trajectory of the wellbore, varying a weight or torque on a drill bit that is drilling the wellbore, varying a rate or concentration of a fluid being pumped into the wellbore, deciding to stop drilling and pull the downhole equipment up before causing a twist-off, or a combination thereof.

**BRIEF DESCRIPTION OF THE DRAWINGS**

The disclosure is illustrated by way of example, and not by way of limitation in the figures of the accompanying drawings in which like reference numerals are used to refer to similar elements. It is appreciated that various features may not be drawn to scale, and the dimensions of various features may be arbitrarily increased or reduced for clarity of discussion. Further, it is contemplated that features of one or more embodiments may be incorporated in other embodiments without additional recitation.

**Figure 1A** illustrates an example computing system, according to an embodiment.
**Figure 1B** illustrates a survey operation being performed by a survey tool, such as seismic truck, to measure properties of the subterranean formation, according to an embodiment.
**Figure 1C** illustrates a drilling operation being performed by drilling tools suspended by a rig and advanced into subterranean formations to form a wellbore, according to an embodiment.
**Figure 1D** illustrates a wireline operation being performed by a wireline tool suspended by a rig and into a wellbore, according to an embodiment.
**Figure 1E** illustrates a production operation being performed by a production tool deployed from a production unit or Christmas tree and into a completed wellbore for drawing fluid from the downhole reservoirs into surface facilities, according to an embodiment.

**Figure 1F** illustrates a schematic view, partially in cross section, of an oilfield having data acquisition tools positioned at various locations along oilfield for collecting data of subterranean formation, according to an embodiment.

**Figure 1G** illustrates an oilfield for performing production operations, according to an embodiment.

**Figure 2** illustrates a flow chart showing a workflow for seismic inversion, according to some embodiments.

**Figures 3A-3D** illustrates four seismic stacks and five deviated wells for a near-stack, a mid-stack, a far-stack, and a full-stack, respectively, according to some embodiments.

**Figures 4A-4C** illustrates a 3D view of full-stack seismic data, predicted p-wave velocity, and predicted density, respectively, according to some embodiments.

**Figure 5** illustrates a network architecture of a multi-task neural network for estimating an initial set of geophysical properties, according to some embodiments.

**Figure 6** illustrates a network architecture of a physics-guided neural network for refining an initial set of geophysical properties, according to some embodiments.

**Figure 7** provides an exemplary detailed workflow for methods, systems, and computer programs for converting seismic data into geophysical property models, according to some embodiments.

**Figures 8A-8B** illustrates a 3D view of a derived P-impedance and synthetic seismic data, according to some embodiments.

**Figure 9** illustrates a spectrum of full-stack seismic data, generated synthetic seismic data, full-stack seismic data after a low-pass filter at 35 Hz has been applied, and generated synthetic seismic data after a low-pass filter at 35 Hz has been applied, according to certain embodiments.

**Figure 10** illustrates a comparison between machine predictions and actual measurements for density, p-wave velocity, p-impedance, RO, and seismic related to a subsurface, according to some embodiments.

**Figures 11A-C** illustrate a 3D view of full-stack seismic data after low pass filtering at 35 Hz, generated synthetic seismic data after low pass filtering at 35Hz, and the residual along two sections of inline #9998 and crossline #2106, respectively, according to some embodiments.

## DETAILED DESCRIPTION

Reference will now be made in detail to embodiments, examples of which are illustrated in the accompanying drawings and figures. In the following detailed description, numerous specific details are set forth in order to provide a thorough understanding of the disclosed technology. However, it will be apparent to one of ordinary skill in the art that the disclosed embodiments may be practiced without these specific details. In other instances, well-known methods, procedures, components, circuits, and networks have not been described in detail so as not to unnecessarily obscure aspects of the embodiments.

It will also be understood that, although the terms first, second, etc., may be used herein to describe various elements, these elements should not be limited by these terms. These terms are used to distinguish one element from another. For example, a first object or step could be termed a second object or step, and, similarly, a second object or step could be termed a first object or step, without departing from the scope of the disclosure. The first object or step, and the second object or step, are both objects or steps, respectively, but they are not to be considered the same object or step.

The terminology used in the description of the disclosed techniques is for the purpose of describing particular embodiments and is not intended to be limiting. As used in the description of this disclosure and the appended claims, the singular forms "a," "an" and "the" are intended to include the plural forms as well, unless the context clearly indicates otherwise. It will also be understood that the term "and/or" as used herein refers to and encompasses any combination of one or more of the associated listed items. It will be further understood that the terms "includes," "including," "comprises" and/or "comprising," when used in this disclosure, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in response to detecting," depending on the context.

Those with skill in the art will appreciate that while some terms in this disclosure may refer to absolutes, *e.g., all* of the components of a wavefield, *all* source receiver traces, *each* of a plurality of objects, etc., the methods and techniques disclosed herein may also be performed on fewer than all of a given thing, *e.g.,* performed on one or more components and/or performed on one or more source receiver traces. Accordingly, in instances in the disclosure where an absolute is used, the disclosure may also be interpreted to be referring to a subset.

### *Computing Systems & Resource Site*

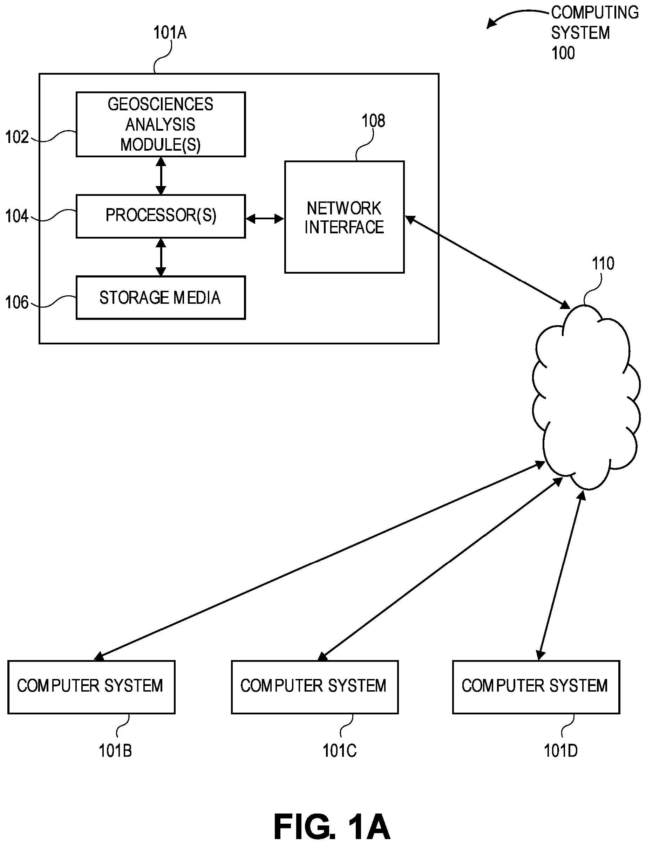

**Figure 1A** depicts an example computing system 100 in accordance with some embodiments. The computing system 100 can be an individual computer system 101A or an arrangement of distributed computer systems. The computer system 101A includes one or more geosciences analysis modules 102 that are configured to perform various tasks according to some embodiments, such as one or more methods disclosed herein. To perform these various tasks, geosciences analysis module 102 executes independently, or in coordination with, one or more processors 104, which is (or are) connected to one or more storage media 106. The processor(s) 104 is (or are) also connected to a network interface 108 to allow the computer system 101A to communicate over a data network 110 with one or more additional computer systems and/or computing systems, such as 101B, 101C, and/or 101D (note that computer systems 101B, 101C and/or 101D may or may not share the same architecture as computer system 101A, and may be located in different physical locations, *e.g.*, computer systems 101A and 101B may be on a ship underway on the ocean, while in communication with one or more computer systems such as 101C and/or 101D that are located in one or more data centers on shore, other ships, and/or located in varying countries on different continents). Note that data network 110 may be a private network, it may use portions of public networks, it may include remote storage and/or applications processing capabilities (e.g., cloud computing).

A processor can include a microprocessor, microcontroller, processor module or subsystem, programmable integrated circuit, programmable gate array, or another control or computing device.

The storage media 106 can be implemented as one or more computer-readable or machine-readable storage media. Note that while in the example embodiment of **Figure 1A** storage media 106 is depicted as within computer system 101A, in some embodiments, storage media 106 may be distributed within and/or across multiple internal and/or external enclosures of computing system 101A and/or additional computing systems. Storage media 106 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs), BluRays or any other type of optical media; or other types of storage devices. Note that the instructions discussed above can be provided on one computer-readable or machine-readable storage medium, or alternatively, can be provided on multiple computer-readable or machine-readable storage media distributed in a large system having possibly plural nodes and/or non-transitory storage means. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

It should be appreciated that computer system 101A is one example of a computing system, and that computer system 101A may have more or fewer components than shown, may combine additional components not depicted in the example embodiment of **Figure 1A,** and/or computer system 101A may have a different configuration or arrangement of the components depicted in **Figure 1A.** The various components shown in **Figure 1A** may be implemented in hardware, software, or a combination of both, hardware and software, including one or more signal processing and/or application specific integrated circuits.

It should also be appreciated that while no user input/output peripherals are illustrated with respect to computer systems 101A, 101B, 101C, and 101D, many embodiments of computing system 100 include computer systems with keyboards, mice, touch screens, displays, etc. Some computer systems in use in computing system 100 may be desktop workstations, laptops, tablet computers, smartphones, server computers, etc.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of protection.

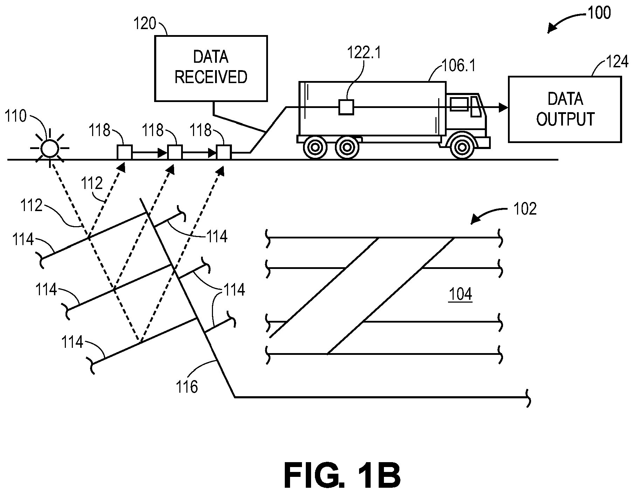

**Figures 1B-1E** illustrate simplified, schematic views of oilfield having subterranean formation containing reservoir therein in accordance with implementations of various technologies and techniques described herein.

**Figure 1B** illustrates a survey operation being performed by a survey tool, such as seismic truck 206.1, to measure properties of the subterranean formation. The survey operation is a seismic survey operation for producing sound vibrations. In **Figure 1B,** one such sound vibration, e.g., sound vibration 212 generated by source 210, reflects off horizons 214 in earth formation 216. A set of sound vibrations is received by sensors, such as geophone-receivers 218, situated on the earth's surface. The data received 220 is provided as input data to a computer 222.1 of a seismic truck 206.1, and responsive to the input data, computer 222.1 generates seismic data output 224. This seismic data output may be stored, transmitted or further processed as desired, for example, by data reduction.

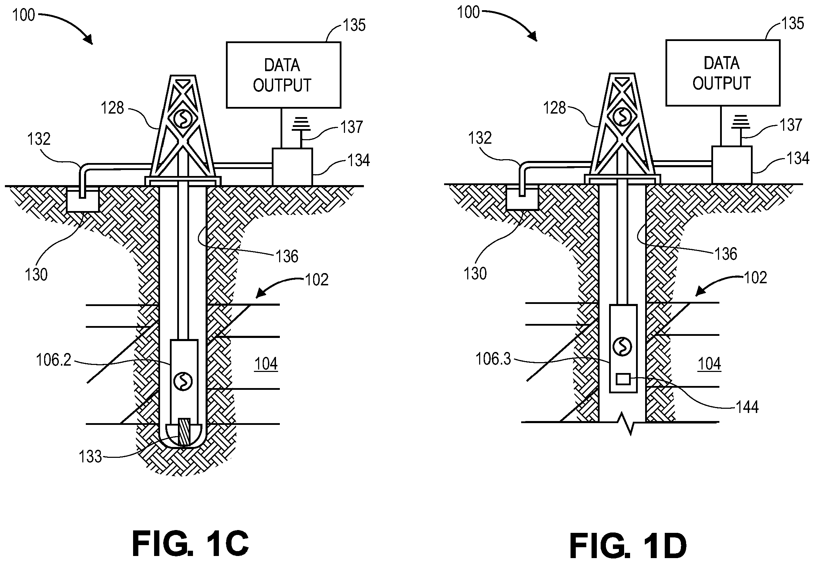

**Figure 1C** illustrates a drilling operation being performed by drilling tools 306.2 suspended by rig 328 and advanced into subterranean formations 302 to form wellbore 336. Mud pit 330 is used to draw drilling mud into the drilling tools via flow line 332 for circulating drilling mud down through the drilling tools, then up wellbore 336 and back to the surface. The drilling mud is filtered and returned to the mud pit. A circulating system may be used for storing, controlling, or filtering the flowing drilling mud. The drilling tools are advanced into subterranean formations 302 to reach reservoir 304. Each well may target one or more reservoirs. The drilling tools are adapted for measuring downhole properties using logging while drilling tools. The logging while drilling tools may also be adapted for taking core sample 333 as shown.

Computer facilities may be positioned at various locations about the oilfield 300 (e.g., the surface unit 334) and/or at remote locations. Surface unit 334 may be used to communicate with the drilling tools and/or offsite operations, as well as with other surface or downhole sensors. Surface unit 334 is capable of communicating with the drilling tools to send commands to the drilling tools, and to receive data therefrom. Surface unit 334 may also collect data generated during the drilling operation and produce data output 335, which may then be stored or transmitted.

Sensors (S), such as gauges, may be positioned about oilfield 300 to collect data relating to various oilfield operations as described previously. As shown, sensor (S) is positioned in one or more locations in the drilling tools and/or at rig 328 to measure drilling parameters, such as weight on bit, torque on bit, pressures, temperatures, flow rates, compositions, rotary speed, and/or other parameters of the field operation. Sensors (S) may also be positioned in one or more locations in the circulating system.

Drilling tools 306.2 may include a bottom hole assembly (BHA) (not shown), generally referenced, near the drill bit (e.g., within several drill collar lengths from the drill bit). The bottom hole assembly includes capabilities for measuring, processing, and storing information, as well as communicating with surface unit 334. The bottom hole assembly further includes drill collars for performing various other measurement functions.

The bottom hole assembly may include a communication subassembly that communicates with surface unit 334. The communication subassembly is adapted to send signals to and receive signals from the surface using a communications channel such as mud pulse telemetry, electro-magnetic telemetry, or wired drill pipe communications. The communication subassembly may include, for example, a transmitter that generates a signal, such as an acoustic or electromagnetic signal, which is representative of the measured drilling parameters. It will be appreciated by one of skill in the art that a variety of telemetry systems may be employed, such as wired drill pipe, electromagnetic or other known telemetry systems.

The wellbore is drilled according to a drilling plan that is established prior to drilling. The drilling plan sets forth equipment, pressures, trajectories and/or other parameters that define the drilling process for the wellsite. The drilling operation may then be performed according to the drilling plan. However, as information is gathered, the drilling operation may need to deviate from the drilling plan. Additionally, as drilling or other operations are performed, the subsurface conditions may change. The earth model may also need adjustment as new information is collected

The data gathered by sensors (S) may be collected by surface unit 334 and/or other data collection sources for analysis or other processing. The data collected by sensors (S) may be used alone or in combination with other data. The data may be collected in one or more databases and/or transmitted on or offsite. The data may be historical data, real time data, or combinations thereof. The real time data may be used in real time, or stored for later use. The data may also be combined with historical data or other inputs for further analysis. The data may be stored in separate databases, or combined into a single database.

Surface unit 334 may include transceiver 337 to allow communications between surface unit 334 and various portions of the oilfield 300 or other locations. Surface unit 334 may also be provided with or functionally connected to one or more controllers (not shown) for actuating mechanisms at oilfield 300. Surface unit 334 may then send command signals to oilfield 300 in response to data received. Surface unit 334 may receive commands via transceiver 337 or may itself execute commands to the controller. A processor may be provided to analyze the data (locally or remotely), make the decisions and/or actuate the controller. In this manner, oilfield 300 may be selectively adjusted based on the data collected. This technique may be used to optimize (or improve) portions of the field operation, such as controlling drilling, weight on bit, pump rates, or other parameters. These adjustments may be made automatically based on computer protocol, and/or manually by an operator. In some cases, well plans may be adjusted to select optimum (or improved) operating conditions, or to avoid problems.

**Figure 1D** illustrates a wireline operation being performed by wireline tool 406.3 suspended by rig 428 and into wellbore 336 of **Figure 1C.** Wireline tool 406.3 is adapted for deployment into wellbore 436 for generating well logs, performing downhole tests and/or collecting samples. Wireline tool 406.3 may be used to provide another method and apparatus for performing a seismic survey operation. Wireline tool 406.3 may, for example, have an explosive, radioactive, electrical, or acoustic energy source 444 that sends and/or receives electrical signals to surrounding subterranean formations 402 and fluids therein.

Wireline tool 406.3 may be operatively connected to, for example, geophones 218 and a computer 222.1 of a seismic truck 206.1 of **Figure 1B.** Wireline tool 406.3 may also provide data to surface unit 434. Surface unit 434 may collect data generated during the wireline operation and may produce data output 435 that may be stored or transmitted. Wireline tool 106.3 may be positioned at various depths in the wellbore 436 to provide a survey or other information relating to the subterranean formation 402.

Sensors (S), such as gauges, may be positioned about oilfield 400 to collect data relating to various field operations as described previously. As shown, sensor S is positioned in wireline tool 406.3 to measure downhole parameters which relate to, for example porosity, permeability, fluid composition and/or other parameters of the field operation.

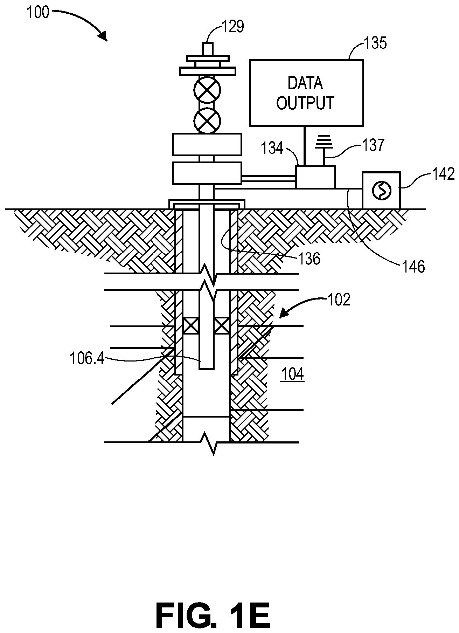

**Figure 1E** illustrates a production operation being performed by production tool 506.4 deployed from a production unit or Christmas tree 529 and into completed wellbore 536 for drawing fluid from the downhole reservoirs into surface facilities 542. The fluid flows from reservoir 504 through perforations in the casing (not shown) and into production tool 506.4 in wellbore 536 and to surface facilities 542 via gathering network 546.

Sensors (S), such as gauges, may be positioned about oilfield 500 to collect data relating to various field operations as described previously. As shown, the sensor (S) may be positioned in production tool 506.4 or associated equipment, such as Christmas tree 529, gathering network 546, surface facility 542, and/or the production facility, to measure fluid parameters, such as fluid composition, flow rates, pressures, temperatures, and/or other parameters of the production operation.

Production may also include injection wells for added recovery. One or more gathering facilities may be operatively connected to one or more of the wellsites for selectively collecting downhole fluids from the wellsite(s).

While **Figures 1C-1E** illustrate tools used to measure properties of an oilfield, it will be appreciated that the tools may be used in connection with non-oilfield operations, such as gas fields, mines, aquifers, storage or other subterranean facilities. Also, while certain data acquisition tools are depicted, it will be appreciated that various measurement tools capable of sensing parameters, such as seismic two-way travel time, density, resistivity, production rate, etc., of the subterranean formation and/or its geological formations may be used. Various sensors (S) may be located at various positions along the wellbore and/or the monitoring tools to collect and/or monitor the desired data. Other sources of data may also be provided from offsite locations.

The field configurations of **Figures 1B-1E** are intended to provide a brief description of an example of a field usable with oilfield application frameworks. Part of, or the entirety, of oilfield may be on land, water, and/or sea. Also, while a single field measured at a single location is depicted, oilfield applications may be utilized with any combination of one or more oilfields, one or more processing facilities and one or more wellsites.

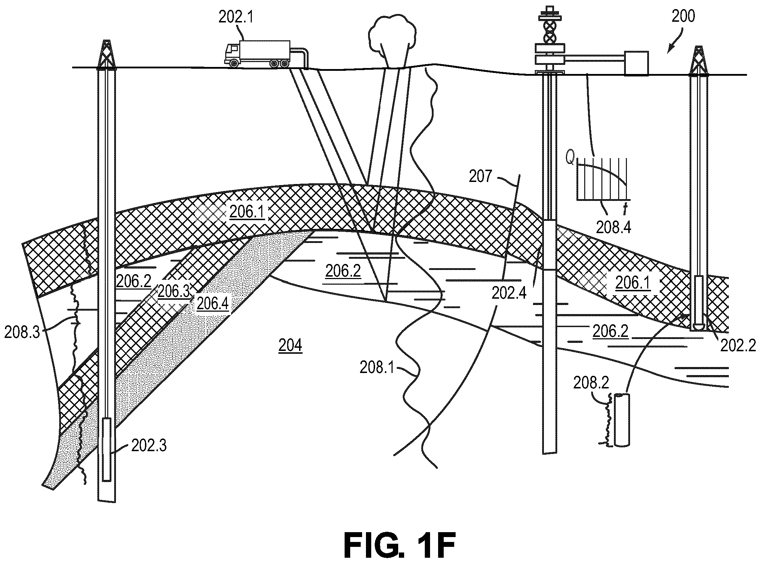

**Figure 1F** illustrates a schematic view, partially in cross section of oilfield 600 having data acquisition tools 602.1, 602.2, 602.3 and 602.4 positioned at various locations along oilfield 600 for collecting data of subterranean formation 604 in accordance with implementations of various technologies and techniques described herein. Data acquisition tools 602.1-602.4 may be the same as data acquisition tools 606.1-606.4 of **Figures 1B-1E,** respectively, or others not depicted. As shown, data acquisition tools 602.1-602.4 generate data plots or measurements 608.1-608.4, respectively. These data plots are depicted along oilfield 600 to demonstrate the data generated by the various operations.

Data plots 608.1-608.3 are examples of static data plots that may be generated by data acquisition tools 602.1-602.3, respectively; however, it should be understood that data plots 608.1-608.3 may also be data plots that are updated in real time. These measurements may be analyzed to better define the properties of the formation(s) and/or determine the accuracy of the measurements and/or for checking for errors. The plots of each of the respective measurements may be aligned and scaled for comparison and verification of the properties.

Static data plot 608.1 is a seismic two-way response over a period of time. Static plot 608.2 is core sample data measured from a core sample of the formation 604. The core sample may be used to provide data, such as a graph of the density, porosity, permeability, or some other physical property of the core sample over the length of the core. Tests for density and viscosity may be performed on the fluids in the core at varying pressures and temperatures. Static data plot 608.3 is a logging trace that provides a resistivity or other measurement of the formation at various depths.

A production decline curve or graph 608.4 is a dynamic data plot of the fluid flow rate over time. The production decline curve provides the production rate as a function of time. As the fluid flows through the wellbore, measurements are taken of fluid properties, such as flow rates, pressures, composition, etc.

Other data may also be collected, such as historical data, user inputs, economic information, and/or other measurement data and other parameters of interest. As described below, the static and dynamic measurements may be analyzed and used to generate models of the subterranean formation to determine characteristics thereof. Similar measurements may also be used to measure changes in formation aspects over time.

The subterranean structure 604 has a plurality of geological formations 606.1-606.4. As shown, this structure has several formations or layers, including a shale layer 606.1, a carbonate layer 606.2, a shale layer 606.3 and a sand layer 606.4. A fault 607 extends through the shale layer 606.1 and the carbonate layer 606.2. The static data acquisition tools are adapted to take measurements and detect characteristics of the formations.

While a specific subterranean formation with specific geological structures is depicted, it will be appreciated that oilfield 600 may contain a variety of geological structures and/or formations, sometimes having extreme complexity. In some locations below the water line, fluid may occupy pore spaces of the formations. Each of the measurement devices may be used to measure properties of the formations and/or its geological features. While each acquisition tool is shown as being in specific locations in oilfield 200, it will be appreciated that one or more types of measurement may be taken at one or more locations across one or more fields or other locations for comparison and/or analysis.

The data collected from various sources, such as the data acquisition tools of **Figure 1F,** may then be processed and/or evaluated. Seismic data displayed in static data plot 608.1 from data acquisition tool 602.1 is used by a geophysicist to determine characteristics of the subterranean formations and features. The core data shown in static plot 608.2 and/or log data from well log 608.3 are used by a geologist to determine various characteristics of the subterranean formation. The production data from graph 608.4 is used by the reservoir engineer to determine fluid flow reservoir characteristics. The data analyzed by the geologist, geophysicist and the reservoir engineer may be analyzed using modeling techniques.

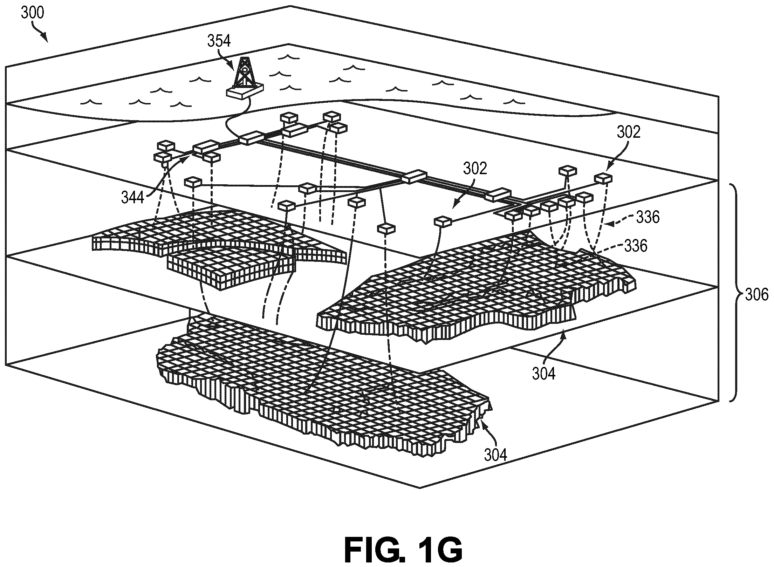

**Figure 1G** illustrates an oilfield 700 for performing production operations in accordance with implementations of various technologies and techniques described herein. As shown, the oilfield has a plurality of wellsites 702 operatively connected to central processing facility 754. The oilfield configuration of **Figure 1G** is not intended to limit the scope of the oilfield application system. Part, or all, of the oilfield may be on land and/or sea. Also, while a single oilfield with a single processing facility and a plurality of wellsites is depicted, any combination of one or more oilfields, one or more processing facilities and one or more wellsites may be present.

Each wellsite 702 has equipment that forms wellbore 736 into the earth. The wellbores extend through subterranean formations 706 including reservoirs 704. These reservoirs 704 contain fluids, such as hydrocarbons. The wellsites draw fluid from the reservoirs and pass them to the processing facilities via surface networks 744. The surface networks 744 have tubing and control mechanisms for controlling the flow of fluids from the wellsite to processing facility 754.

## A *Deep Learning Workflow for Seismic Inversion*

Seismic inversion is an approach for converting collected seismic data into geophysical property models for subsurface interpretation and reservoir characterization. However, previous workflows related to seismic inversion can be complicated and involve large amounts of computational resources and human supervision. Here the current disclosure provides a practical workflow that assists in automating the process.

Recent advances in machine learning can pose new opportunities for integrating seismic data with well logs to automate the process of geophysical property estimation. Many attempts have been made toward implementing neural networks, including convolutional neural networks (CNNs) and their derivatives, into building an optimal non-linear mapping function between geophysical properties and post-stack seismic data as well as angle-stack seismic data. When applying them to field datasets, however, the results from some of these algorithms may tend to have a relatively lower resolution compared to the actual seismic data and moreover may fail to derive synthetic seismic data that matches well with the actual seismic data, both of which limit the validation of the generated prediction and their application to following property modeling and simulation.

Estimating geophysical properties of rock, particularly density and velocity from 3D seismic data, is relevant for the success of subsurface exploration and characterization. Previously solutions include AVO or post- and pre-stack seismic inversion which often starts from an initial model and iteratively updates it by minimizing the misfit between the actual seismic data and the synthetic data generated from the model with known physics. While the solutions have been widely used in the past decades, the task remains complicated, involves huge computational resources, and heavily relies on manual supervision particularly on building a good initial model and fine-tuning the regularization terms, both of which greatly determines the following optimization process.

According to certain embodiments, the workflow of the current disclosure includes a number of steps including: (i) large-scale structural model construction, (ii) initial model estimation via a multi-task convolutional neural network (CNN), (iii) physics-based property-reflectivity-seismic pair generation, and (iv) refinement of the initial model estimation via a physics-guided CNN. The workflow may provide a practical and automated solution to seismic inversion with minimum human intervention. The solution can be applied to both rock property inversion for hydrocarbon exploration and near surface soil property inversion for wind energy development or potentially other energy development projects. The workflow may reduce the dependence on human intervention and accelerates the process for planning operations at a work site.

In certain embodiments, a workflow is provided which is capable of resolving both limitations. While requiring minimum human intervention, it not only leverages the CNNs for efficient data integration between angle-stack seismic data, but moreover embeds the prior knowledge including AVO analysis and Zoeppritz question into enhancing the resolution and enforcing the correlation with actual seismic images.

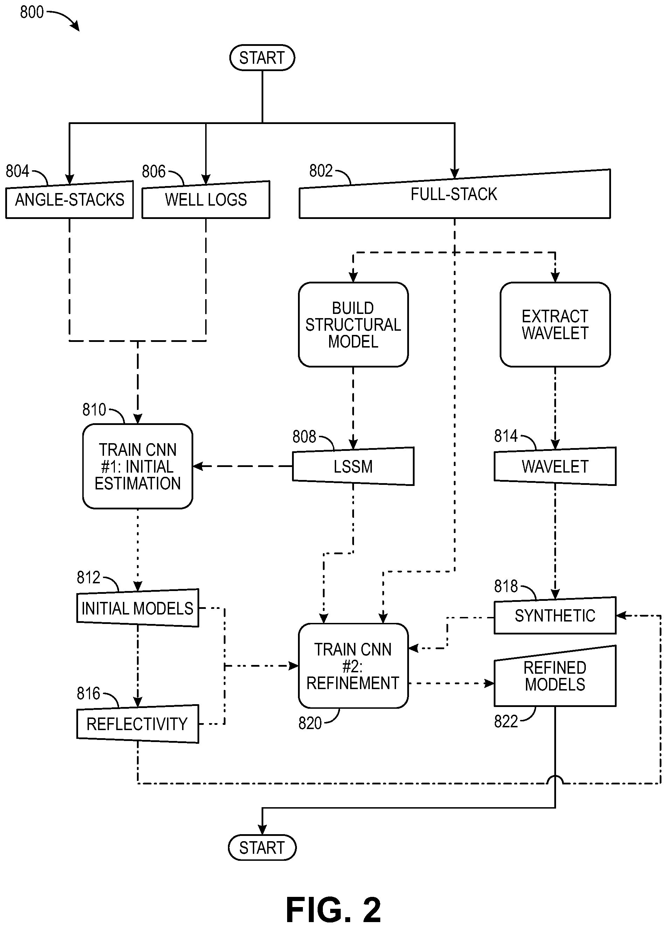

**Figure 2** illustrates a flowchart of a proposed method 800 for seismic inversion that is accelerated by two physics-guided CNNs, according to certain embodiments. According to certain embodiments, seismic data related to a subsurface of a site is received by a system, for example the computer 222.1 of the seismic truck 206.1 as seen in **Figure 1B.** The seismic data may include stacks, which in turn may include full-stacks 802 and angled stacks 804, as well as well logs 806 available as input.

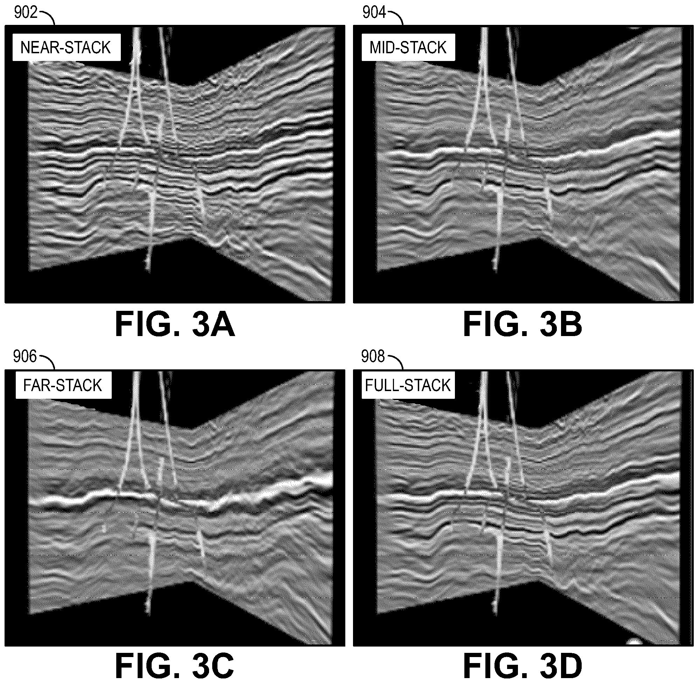

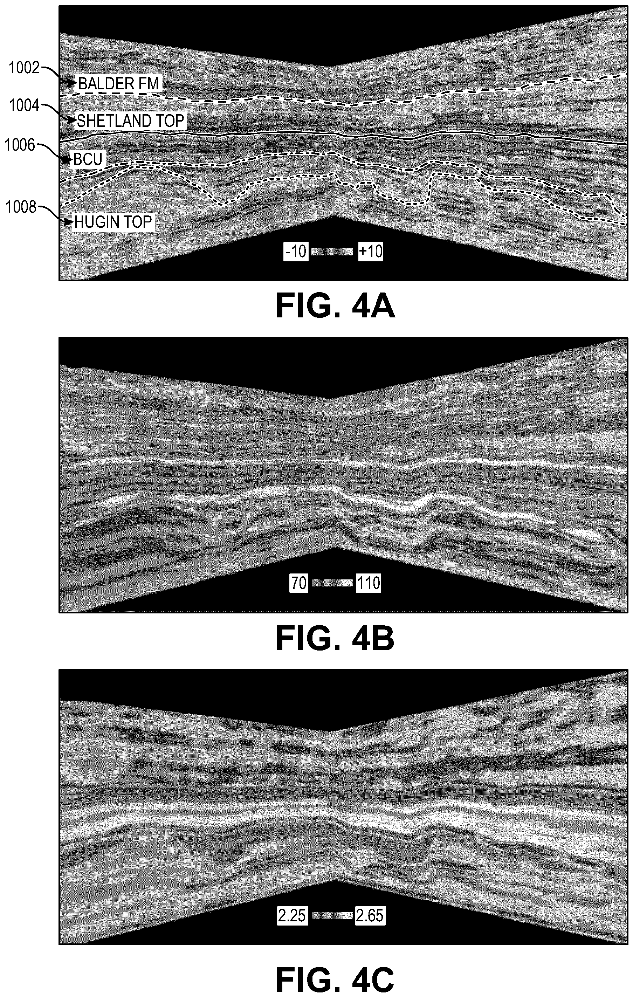

According to certain embodiments, the method includes building a large-scale structural model (LSSM) 808 that accurately captures the dominant structures in a study area or area of interest within the subsurface. The LSSM 808 may be used for constraining a number of CNNs in later steps of the method. In certain embodiments, a set of major horizons and faults, if present, may be interpreted from the provided seismic data and then stacked in order of geologic time to construct the corresponding structural framework. For example, the received seismic data may include near-stack 902, mid-stack 904, far-stack 906, and full-stack 908 seismic data in as seen in **Figures 3A-3D** respectively, each of which may include 401 inlines, 451 crosslines, and 251 samples per trace, along with five deviated wells, each of which include two well logs, namely density (RHOB) and P-wave velocity (DT), and a set of horizon interpretation. Alternatively, such a model can be represented by relative geologic time, which could be estimated using phase unwrapping and neural networks. In certain embodiments, the LSSM 808 may be constructed based on the four horizons, including but not limited to Balder Fm 1002, Shetland Top 1004, BCU 1006, and Hugin Top 1008, within this target depth as seen in **Figure 4A.** Applying the method 800 to the seismic stacks seen in Figures 3A-3D provides two volumes, namely RHOB and DT.

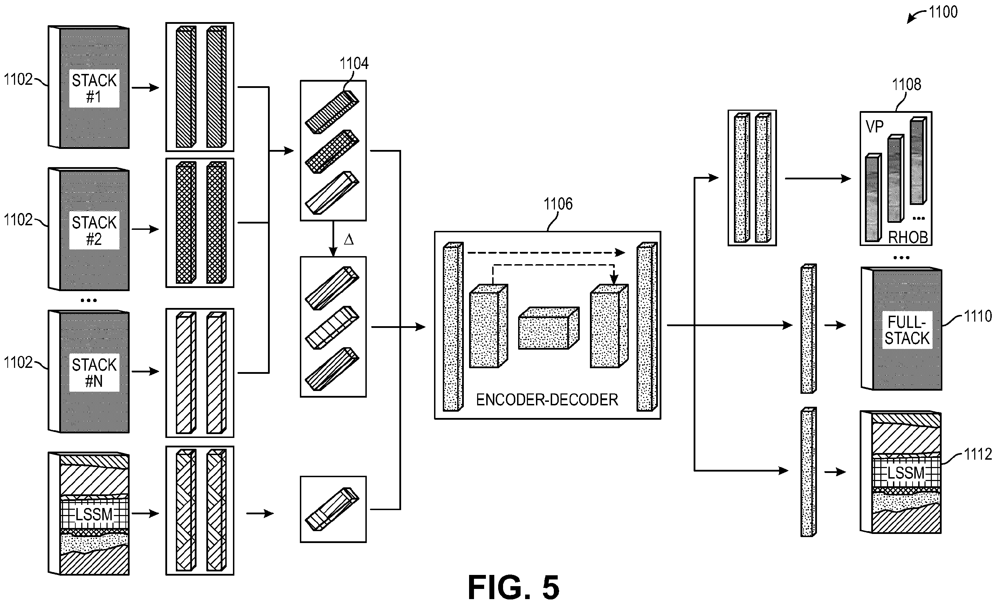

According to certain embodiments, the method 800 may also include estimating an initial set of geophysical properties or initial models 812 via a first neural network 810, such as convolutional neural network (CNN). The first neural network may be trained by mapping local 3D patches of the angle-stack seismic data 804 and the constructed LSSM 808 centered around the well paths with well logs 806. **Figure 5** illustrates the corresponding network architecture 1100 for estimating an initial set of geophysical properties or initial models 812 which may first extract a set of features from each angle stack 1102, calculate a gradient 1104 between each feature set as approximated AVO gradients (AAGs), fuse all features together for encoding and decoding 1106, and finally splits its objective into three tasks, including but not limited to estimating the target properties 1108, calculating the full-stack seismic data 1110, and reconstructing the LSSM 1112 for greater accuracy. Correspondingly, the loss function $L_1$ may be defined as seen in equation 1 in which $P_{well}$, $S_{full}$, and $M_{built}$ denotes the measured properties, actual full-stack seismic, and built LSSM, respectively, whereas $P_{pred}$, $S_{pred}$, and $M_{pred}$ denotes the three machine predictions, respectively. Applying the trained second neural network 820 to the entire survey produces the corresponding property volumes seen in **Figures 4B-4C.**

$$L_1 = \left\| P_{well} - P_{pred} \right\| + \left\| S_{full} - S_{pred} \right\| + \left\| M_{built} - M_{pred} \right\| \tag{1}$$

According to certain embodiments and returning to **Figure 2,** the method 800 may also include generating pseudo property-reflectivity-seismic pairs by first extracting a wavelet 814 representative of the seismic signatures observed within the real full-stack seismic 802. A reflectivity 816 may then be calculated from the initial density and P-velocity models 812 as discussed above. Additionally, both the extracted wavelet 814 and the calculated reflectivity 816 may be convolved to generate a volume of a synthetic seismic 818. This prepares the property-reflectivity-seismic pairs for training in a second neural network 820 discussed in further detail below.

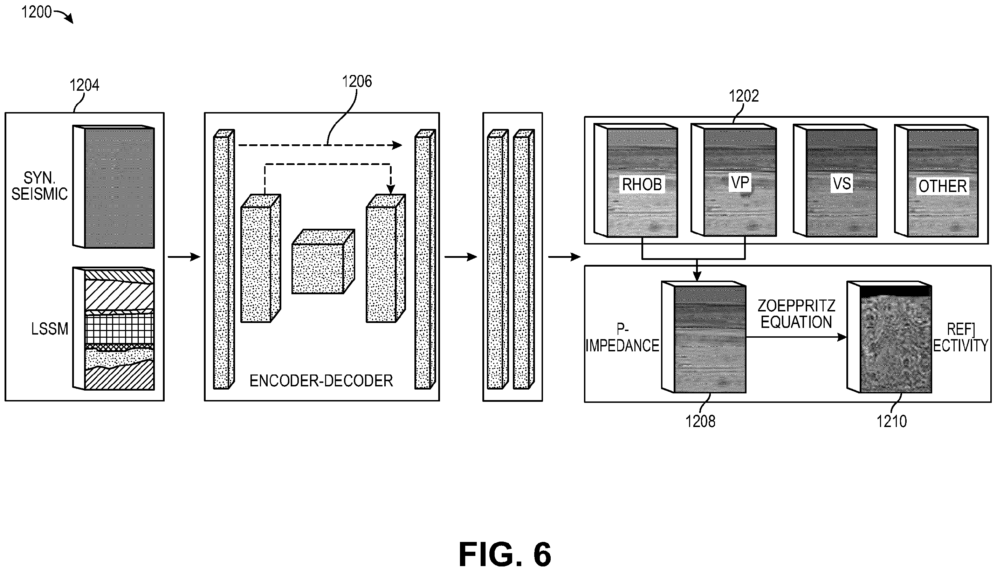

According to certain embodiments, the method 800 may also include refining the initial geophysical property models 812 via the second neural network 820. In certain embodiments, the second neural network 820 may be a physics-guided CNN. The second neural network 820 may be trained by mapping the generated synthetic seismic volume 818 and the constructed LSSM 808 which includes corresponding volumes of properties and the reflectivity. **Figure 6** illustrates the network architecture 1200, according to an embodiment, which first extracts a set of features 1202 from the synthetic seismic image 1204 through an encoder-decoder 1206, then converts the features 1202 into a set of target properties 1208, and finally applies the Zoeppritz equation, instead of convolutional layers, to obtain the reflectivity 1210. Correspondingly, the loss function $L_2$ may be as defined in Equation 2:

$$L_2 = \left\| P_{init} - P_{pred} \right\| +$$
$$\alpha \cdot \left\| R_{init} - R_{pred} \right\| \tag{2}$$

in which $P_{init}$ and $R_{init}$ denotes the initial property and reflectivity generated in step (c), respectively, whereas $P_{pred}$ and $R_{pred}$ denotes the two machine predictions, respectively. $\alpha$ denotes a regularization factor.

Returning to **Figure 2,** applying the trained second neural network 820 to the actual full-stack seismic data 802 produces the corresponding refined models 822 related to volumes of refined geophysical properties, from which P-impedance and synthetic seismic data can be further derived.

### *Exemplary Workflow*

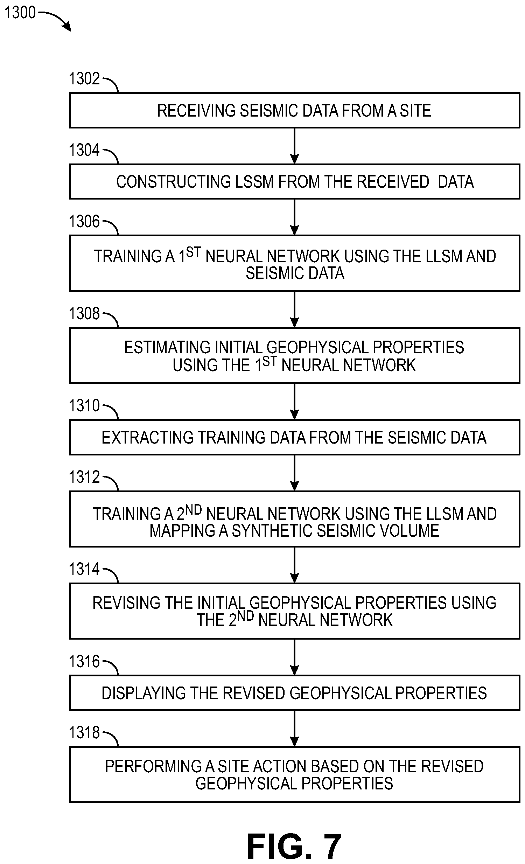

**Figure 7** provides an exemplary detailed workflow 1300 for converting seismic data into geophysical property models. It is appreciated that a signal processing engine stored in a memory device (e.g., transitory or non-transitory memory) may cause a computer processor to assist or otherwise facilitate execution of one or more of the various processing stages of workflow 1300.

Turning to block 1302 of flowchart 1300, the workflow 1300 may include receiving seismic data from a site, wherein the seismic data may include seismic stacks and well logs that are related to a subsurface of the site.

EP 4 617 734 A1

According to certain embodiments, the workflow 1300 may also include constructing a large-scale structural model (LSSM) from the received seismic data, as at 1304. In certain embodiments, the structural framework may include a stack of major horizons and faults that have been interpreted from the seismic data in order of geologic time.

According to certain embodiments, the workflow 1300 may also include training a first neural network with the LSSM and the received seismic data, as at 1306.

According to certain embodiments, the workflow 1300 may also include estimating initial geophysical properties that are related to the site using the first neural network, as at 1308. In certain embodiments, the first neural network may be used to estimate the initial geophysical properties, however in other embodiments the first neural network may be expanded to perform additional tasks such as calculating a full-stack of seismic data and reconstructing the LSSM.

According to certain embodiments, the workflow 1300 may also include extracting training data from the seismic data, as at 1310. In certain embodiments, extracting training data may include extracting a wavelet from a full-stack within the seismic stacks of the seismic data, calculating a reflectivity from a density value and a P-velocity value from within the initial geophysical properties, and then generating a synthetic seismic volume based on the wavelet and the reflectivity. Take for example, a predicted P-wave velocity and a predicted density along two sections of inline #9998 and crossline #2106 seen in **Figures 4B** and **4C,** respectively, derived from the full-stack of seismic data related to the subsurface seen in **Figure 4A after applying the trained second neural network 820.** It should be noted that there is a lateral consistency and vertical resolution across the survey.

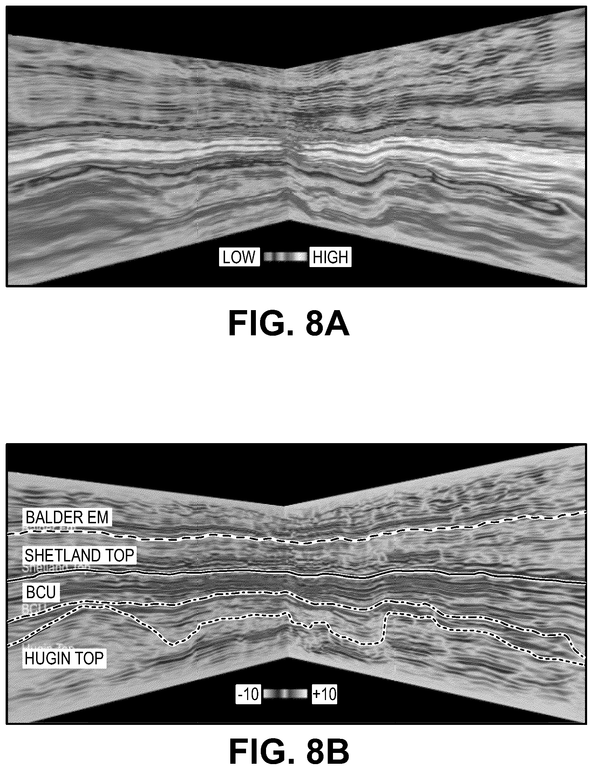

According to certain embodiments, the workflow 1300 may also include training the second neural network with the LSSM and by mapping the synthetic seismic volume, as at 1312. In certain embodiments, a predicted RHOB and DT is clipped to two 2D lines of inline #9998 and crossline #2106 in Figure 4A. The P-impedance and the synthetic seismic may then be derived using a zero-phase wavelet that has been extracted from the full-stack seismic data and then clipped to the same two sections as seen in Figures 8A-8B . In certain embodiments, the machine prediction may be of high lateral consistency and vertical resolution across the survey, and moreover the synthetic seismic data of Figure 8B is visually similar to the actual full-stack seismic seen Figure 4A, without obvious distortion in phase or energy.

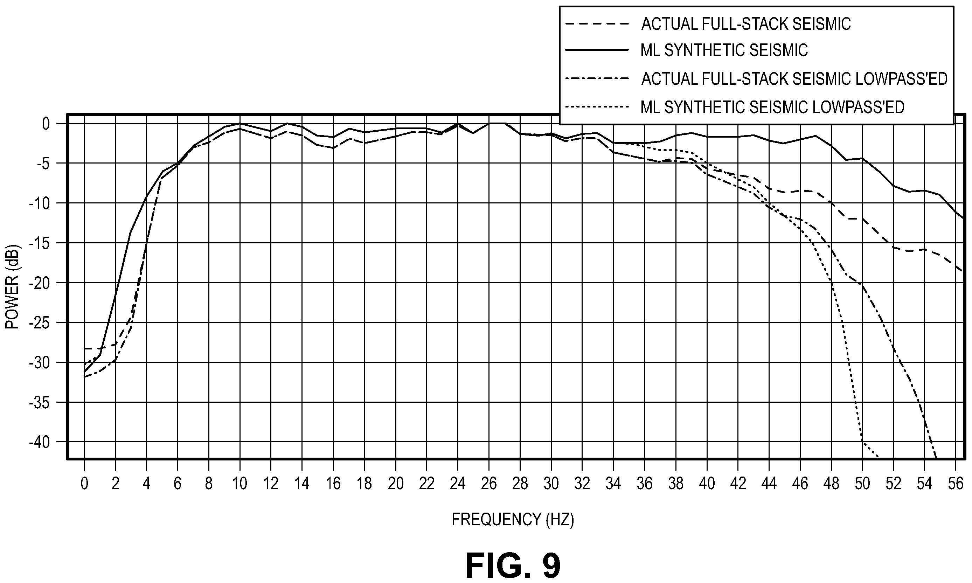

According to certain embodiments and as seen in Figure 9, the spectrums of the original full-stack may be compared and derived synthetic seismic data. While both spectrums overlap between 6 ~ 32 Hz, the derived synthetic seismic is of slightly stronger energy particularly over 35 Hz.

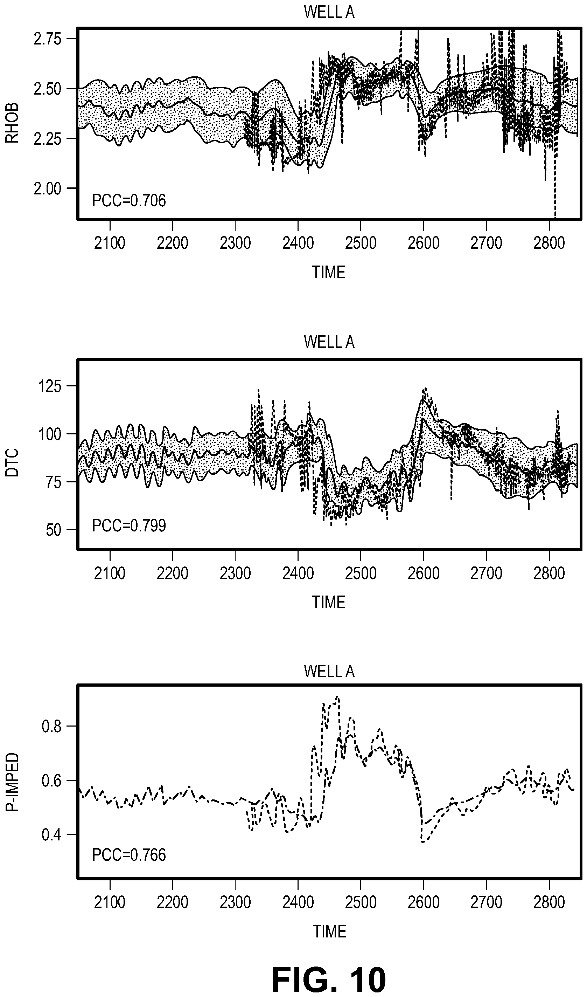

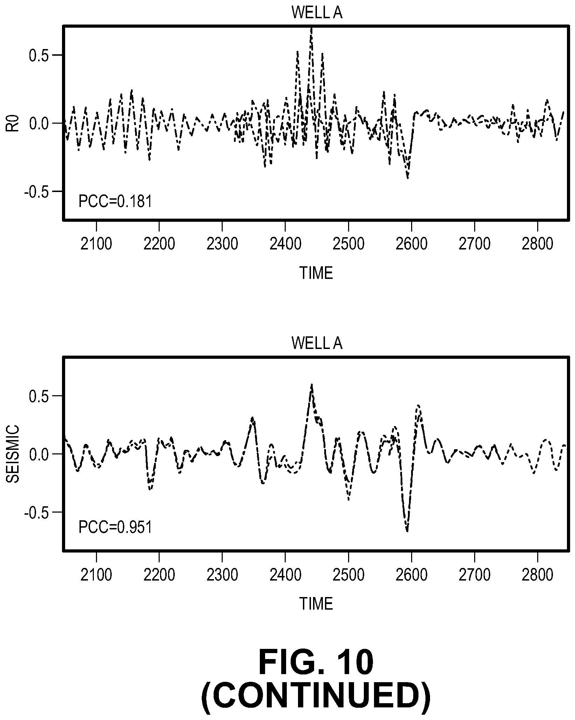

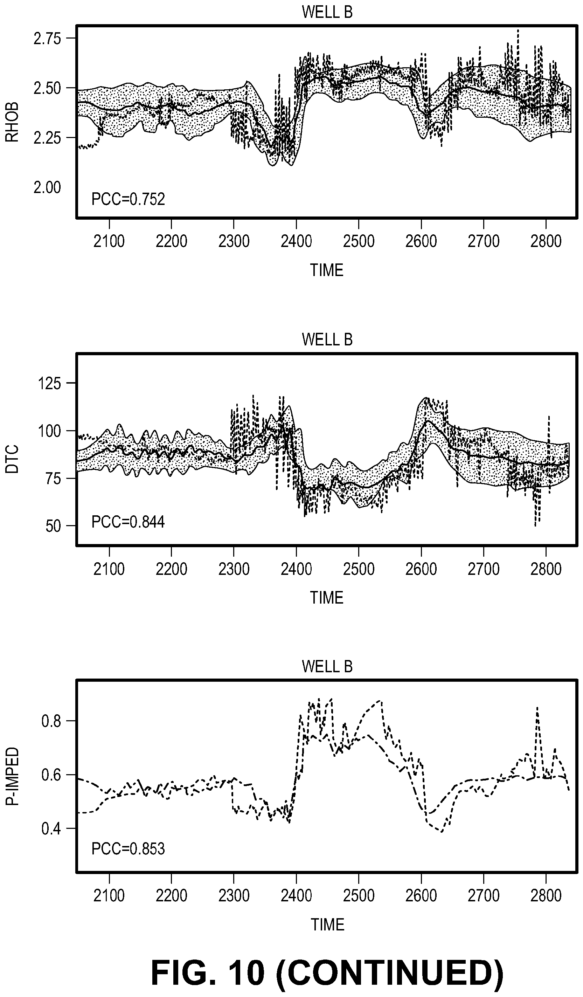

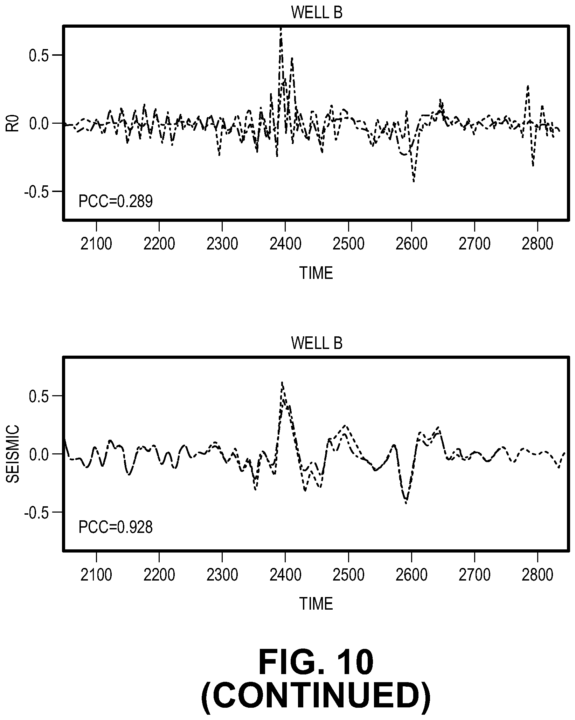

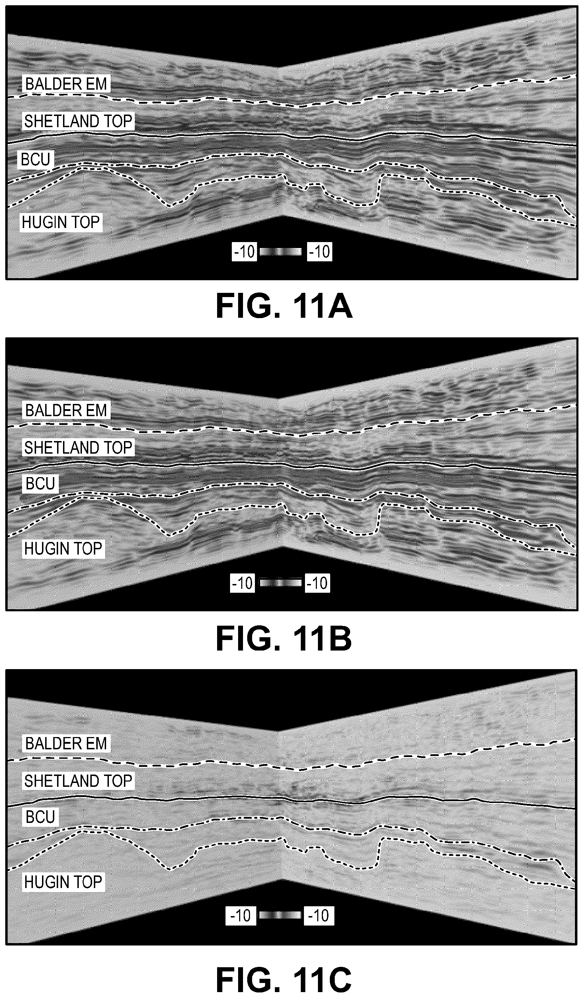

For quantitatively evaluating the predicted and derived properties, the properties may be extracted along the well path and then compared with the actual measurements, according to certain embodiments. Figure 10 displays the comparison at two wells, Well A and Well B. The Pearson correlation coefficient (PCC) indicates a good match particularly on the RHOB, DT, and derived synthetic seismic data. Next, given the slightly higher energy in the derived synthetic seismic data than the actual full-stack seismic observed in Figure 9, a low-pass filter at 35 Hz may be applied to both the synthetic seismic data and the actual seismic data. The updated spectrums may be displayed over the spectrums of the original comparison spectrums as seen in Figure 9, as well as displayed as a filtered image as seen in Figure 11A. Figure 11B in turn shows the synthetic seismic data after low-pass filtering at 35 Hz, while Figure 11C shows the residual along two sections of inline #9998 and crossline #2106, with the four horizons of Balder Fin, Shetland Top, BCU, and Hugin Top being shown for reference. In certain embodiments, the residual confirms the high similarity between the synthetic seismic with the actual seismic, implying the accuracy of the estimated properties from our proposed workflow. It could be further minimized by fine-tuning the wavelet selection and spectrum control.

According to certain embodiments, the workflow 1300 may include revising the initial geophysical properties using the second neural network, as at 1314. In certain embodiments, revising the initial geophysical properties includes applying the second neural network to the seismic data received from the site.

According to certain embodiments, the workflow 1300 may include displaying the revised geophysical properties on a screen, as at 1316. In certain embodiments, the revised geophysical properties may include a variety of geophysical properties including but not limited to a density of at least a portion of the subsurface, a p-wave velocity related to the subsurface, or an s-wave velocity related to the subsurface.

According to certain embodiments, the workflow 1300 may include performing a site action based on the revised geophysical properties, as at 1318. In certain embodiments, performing the site action includes generating or transmitting a signal that instructs or causes an action to occur, wherein the action includes a physical action, and wherein the physical action includes selecting where to drill a wellbore in the subsurface formation, drilling the wellbore, varying a trajectory of the wellbore, varying a weight or torque on a drill bit that is drilling the wellbore, varying a rate or concentration of a fluid being pumped into the wellbore, deciding to stop drilling and pull the downhole equipment up before causing a twist-off, or a combination thereof.

The steps in the processing methods described above may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of this disclosure.

Of course, many processing techniques for collected data, including one or more of the techniques and methods disclosed herein, may also be used successfully with collected data types other than seismic or other subsurface modeling data. While certain implementations have been disclosed in the context of seismic or other subsurface data collection and processing, those with skill in the art will recognize that one or more of the methods, techniques, and computing systems disclosed herein can be applied in many fields and contexts where data involving structures arrayed in a multi-dimensional space and/or subsurface region of interest may be collected and processed, *e.g.*, medical imaging techniques such as tomography, ultrasound, MRI and the like for human tissue; radar, sonar, and LIDAR imaging techniques; mining area surveying and monitoring, oceanographic surveying and monitoring, and other appropriate multi-dimensional imaging problems.

Some examples of equations and mathematical expressions may have been provided in this disclosure. But those with skill in the art will appreciate that variations of these expressions and equations, alternative forms of these expressions and equations, and related expressions and equations that can be derived from the example equations and expressions provided herein may also be successfully used to perform the methods, techniques, and workflows related to the embodiments disclosed herein.

The foregoing description, for purposes of explanation, has been described with reference to specific embodiments. However, the illustrative discussions above are not intended to be exhaustive or to limit the described embodiments to the precise forms disclosed. Many modifications and variations are possible in view of the above teachings. The embodiments were chosen and described in order to explain the principles of this disclosure and its practical applications, to thereby enable others skilled in the art to use the disclosed approach and various embodiments with various modifications as are suited to the particular use contemplated.

**Claims**

1. A method for converting seismic data into geophysical property models, the method comprising:

   receiving seismic data from a site;
   constructing a large-scale structural model (LSSM) from the received seismic data;
   training a first neural network with the LSSM and the received seismic data;
   estimating initial geophysical properties related to the site using the first neural network;
   extracting training data from the received seismic data;
   training a second neural network with the extracted training data;
   revising the initial geophysical properties using the second neural network;
   displaying the revised geophysical properties on a screen; and, preferably,
   performing a site action based on the revised geophysical properties.

2. The method of claim 1, wherein extracting the training data from the seismic data comprises extracting a wavelet from the seismic data, preferably calculating a reflectivity from a density value and a P-wave velocity from the initial geophysical properties, more preferably generating a synthetic seismic volume based on the wavelet and the reflectivity.

3. The method of claim 1 or 2, wherein the seismic data comprises seismic stacks and well logs related to a subsurface of the site.

4. The method of any one of the preceding claims, wherein the first and second neural networks are convolutional neural networks.

5. The method of any one of the preceding claims, wherein a structural framework of the LSSM comprises a stack of major horizons and faults interpreted from the seismic data in order of geologic time.

6. The method of any one of the preceding claims, wherein estimating initial geophysical properties related to the site using the first neural network comprises defining a loss function as:

$$L = \left\| P_{well} - P_{pred} \right\| + \left\| S_{full} - S_{pred} \right\| + \left\| M_{built} - M_{pred} \right\|,$$

   wherein $P_{well}$, $S_{full}$, and $M_{built}$ denote measured properties related to the site, measured full-stack seismic data, and the constructed LSSM, respectively, and wherein $P_{pred}$, $S_{pred}$, and $M_{pred}$ denote predicted properties related to the site, predicted full-stack seismic data, and a predicted LSSM, respectively.

7. The method of claim 6, wherein revising the initial geophysical properties using the second neural network comprises defining a loss function as:

$$L = \|P_{init} - P_{pred}\| + \ \alpha \cdot \|R_{init} - R_{pred}\|,$$

wherein $P_{init}$ and $R_{init}$ denote initial geophysical properties and a generated reflectivity, respectively, wherein $P_{pred}$ and $R_{pred}$ denote predicted geophysical properties and a predicted reflectivity, respectively, and wherein $\alpha$ denotes a regularization factor.

8. A computing system, comprising:

one or more processors;
a memory system comprising one or more non-transitory computer-readable media storing instructions that, when executed by at least one of the one or more processors, cause the computing system to perform operations, the operations comprising:

receiving seismic data from a site;
constructing a large-scale structural model (LSSM) from the received seismic data;
training a first neural network with the LSSM and the received seismic data;
estimating initial geophysical properties related to the site using the first neural network;
extracting training data from the seismic data;
training a second neural network with the LSSM and by mapping a synthetic seismic volume;
revising the initial geophysical properties using the second neural network;
displaying the revised geophysical properties on a screen; and
performing a site action based on the revised geophysical properties.

9. The computing system of claim 8, wherein extracting training data from the seismic data comprises:

extracting a wavelet from the seismic data;
calculating a reflectivity from a density value and a P-wave velocity from the initial geophysical properties; and
generating a synthetic seismic volume based on the wavelet and the reflectivity.

10. The computing system of claim 8 or 9, wherein revising the initial geophysical properties comprises applying the second neural network to the seismic data received from the site, wherein the displayed revised geophysical properties preferably comprises a density of at least a portion of a subsurface of the site, a p-wave velocity related to the subsurface of the site, or an s-wave velocity related to the subsurface of the site.

11. The computing system of any one of the claims 8 - 10, wherein the first neural network is a multi-task convolutional neural network.

12. The computing system of any one of the claims 8 - 11, wherein the second neural network is a physics-guided convolutional neural network.

13. The computing system of any one of the claims 8 - 12, wherein the received seismic data comprises full-stack seismic data and angle-stack seismic data related to a subsurface of the site, wherein training a first neural network with the LSSM and the received seismic data preferably comprises training the first neural network with the angle-stack seismic data and well logs related to the subsurface of the site.

14. The computing system of any one of the claims 8 - 13, wherein performing the site action comprises generating or transmitting a signal that instructs or causes an action to occur, wherein the action comprises a physical action, and wherein the physical action comprises selecting where to drill a wellbore in the subsurface formation, drilling the wellbore, varying a trajectory of the wellbore, varying a weight or torque on a drill bit that is drilling the wellbore, varying a rate or concentration of a fluid being pumped into the wellbore, deciding to stop drilling and pull the downhole equipment up before causing a twist-off, or a combination thereof.

15. A non-transitory computer-readable medium storing instructions that, when executed by one or more processors of a computing system, cause the computing system to perform operations, the operations comprising:

receiving seismic data from a site, wherein the seismic data comprises seismic stacks and well logs related to a subsurface of the site;

constructing a large-scale structural model (LSSM) from the received seismic data, wherein a structural framework of the LSSM comprises a stack of major horizons and faults interpreted from the seismic data in order of geologic time;

training a first neural network with the LSSM and the received seismic data;

estimating initial geophysical properties related to the site using the first neural network, wherein the first neural network calculates a full-stack synthetic seismic data set and improves the accuracy of the LSSM;

extracting training data from the seismic data, wherein extracting training data comprises:

extracting a wavelet from a full-stack within the seismic stacks of the seismic data;

calculating a reflectivity from a density value and a P-velocity value from within the initial geophysical properties; and

generating a synthetic seismic volume based on the wavelet and the reflectivity;

training the second neural network with the LSSM and by mapping the synthetic seismic volume;

revising the initial geophysical properties using the second neural network, wherein revising the initial geophysical properties comprises applying the second neural network to the seismic data received from the site;

displaying the revised geophysical properties on a screen, wherein the revised geophysical properties comprises a density of at least a portion of the subsurface, a p-wave velocity related to the subsurface, or an s-wave velocity related to the subsurface; and

performing a site action based on the revised geophysical properties, wherein performing the site action comprises generating or transmitting a signal that instructs or causes an action to occur, wherein the action comprises a physical action, and wherein the physical action comprises selecting where to drill a wellbore in the subsurface formation, drilling the wellbore, varying a trajectory of the wellbore, varying a weight or torque on a drill bit that is drilling the wellbore, varying a rate or concentration of a fluid being pumped into the wellbore, deciding to stop drilling and pull the downhole equipment up before causing a twist-off, or a combination thereof.

FIG. 1A

**FIG. 1B**

FIG. 1D

FIG. 1C

**FIG. 1E**

FIG. 1F

**FIG. 1G**

FIG. 2

902

NEAR-STACK

**FIG. 3A**

904

MID-STACK

**FIG. 3B**

906

FAR-STACK

**FIG. 3C**

908

FULL-STACK

**FIG. 3D**

EP 4 617 734 A1

FIG. 4A

FIG. 4B

FIG. 4C

**FIG. 5**

**FIG. 6**

1300

**1302** RECEIVING SEISMIC DATA FROM A SITE

**1304** CONSTRUCTING LSSM FROM THE RECEIVED DATA

**1306** TRAINING A 1ST NEURAL NETWORK USING THE LLSM AND SEISMIC DATA

**1308** ESTIMATING INITIAL GEOPHYSICAL PROPERTIES USING THE 1ST NEURAL NETWORK

**1310** EXTRACTING TRAINING DATA FROM THE SEISMIC DATA

**1312** TRAINING A 2ND NEURAL NETWORK USING THE LLSM AND MAPPING A SYNTHETIC SEISMIC VOLUME

**1314** REVISING THE INITIAL GEOPHYSICAL PROPERTIES USING THE 2ND NEURAL NETWORK

**1316** DISPLAYING THE REVISED GEOPHYSICAL PROPERTIES

**1318** PERFORMING A SITE ACTION BASED ON THE REVISED GEOPHYSICAL PROPERTIES

## FIG. 7

**FIG. 8A**

**FIG. 8B**

FIG. 9

**FIG. 10**

WELL A

WELL A

# FIG. 10
## (CONTINUED)

FIG. 10 (CONTINUED)

WELL B

PCC=0.289

WELL B

PCC=0.928

# FIG. 10
# (CONTINUED)

**FIG. 11A**

**FIG. 11B**

**FIG. 11C**

**EUROPEAN SEARCH REPORT**

Application Number

EP 25 16 3920

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/204682 A1 (SCHLUMBERGER TECHNOLOGY CORP [US]; SCHLUMBERGER CA LTD [CA] ET AL.) 29 September 2022 (2022-09-29) | 1-8, 10-14 | INV. G01V1/30 G01V1/34 |
| Y | * paragraph [0004] * | 9 | G01V20/00 |
| A | * paragraph [0047] - paragraph [0049] * | 15 | |
| | * paragraph [0064] * | | |
| | * paragraph [0012] * | | |
| | * paragraph [0010] * | | |
| | * paragraph [0031] * | | |
| | * paragraph [0025] * | | |
| | * paragraph [0008] - paragraph [0009] * | | |
| | * paragraph [0059] * | | |
| | * paragraph [0079] * | | |
| | * claim 3 * | | |
| | * figures 2,5,1A-D * | | |
| | ----- | | |
| X | US 2023/026857 A1 (DI HAIBIN [US] ET AL) 26 January 2023 (2023-01-26) | 1-4,8, 10-14 | |
| Y | * paragraph [0004] - paragraph [0007] * | 9 | |
| A | * paragraph [0021] * | 15 | |
| | * paragraph [0057] - paragraph [0066] * | | TECHNICAL FIELDS SEARCHED (IPC) |
| | * figure 4 * | | |
| | ----- | | G01V |
| Y | US 2019/277993 A1 (CHEN XUEHUA [CN] ET AL) 12 September 2019 (2019-09-12) | 9 | |
| | * paragraph [0005] - paragraph [0006] * | | |
| | ----- | | |

The present search report has been drawn up for all claims

| Place of search | Date of completion of the search | Examiner |
|---|---|---|
| The Hague | 9 July 2025 | Hippchen, Sabine |

EPO FORM 1503 03.82 (P04C01)

## ANNEX TO THE EUROPEAN SEARCH REPORT
## ON EUROPEAN PATENT APPLICATION NO.

EP 25 16 3920

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2025

| Patent document cited in search report | Publication date | Patent family member(s) | | Publication date |
|---|---|---|---|---|
| WO 2022204682 A1 | 29-09-2022 | CA | 3214674 A1 | 29-09-2022 |
| | | CN | 117136318 A | 28-11-2023 |
| | | EP | 4314904 A1 | 07-02-2024 |
| | | US | 2024168194 A1 | 23-05-2024 |
| | | WO | 2022204682 A1 | 29-09-2022 |
| US 2023026857 A1 | 26-01-2023 | CA | 3167417 A1 | 15-07-2021 |
| | | EP | 4088004 A1 | 16-11-2022 |
| | | US | 2023026857 A1 | 26-01-2023 |
| | | WO | 2021142406 A1 | 15-07-2021 |
| US 2019277993 A1 | 12-09-2019 | CN | 108459350 A | 28-08-2018 |
| | | US | 2019277993 A1 | 12-09-2019 |

EPO FORM P0459

For more details about this annex : see Official Journal of the European Patent Office, No. 12/82

**EP 4 617 734 A1**

REFERENCES CITED IN THE DESCRIPTION

**Patent documents cited in the description**

- US 63565106